# DEMANDE DE BREVET EUROPEEN

(11) **EP 1 362 662 A1**
(43) Date de publication de la demande: **19.11.2003**
(21) Numéro de dépôt: 02076799.2
(22) Date de dépôt: 08.05.2002
(51) Int. Cl.: B23K 26/02, B23K 26/00, B23K 26/10, B23K 26/24, B23K 37/04

(54) **Installation de soudage au laser et tête de soudage équipant une telle installation**

(71) Demandeur: LASAG AG, CH-3600 Thun (CH)
(72) Inventeur: Gressly, André, 3626 Hünibach (CH)
(74) Mandataire: Surmely, Gérard

(57) **Abrégé**

L'installation de soudage au laser comprend une tête (2) dont la partie intermédiaire (24) comprend des moyens de focalisation (22) définissant un axe optique (Y) sensiblement confondu avec l'axe longitudinale de la tête. Cette tête comprend en outre des moyens de réflexion ou de diffraction (32) du faisceau laser focalisé agencés après les moyens de focalisation, c'est à dire en aval de ceux-ci relativement au sens de propagation du faisceau laser, et qui dévient angulairement le faisceau laser focalisé, notamment d'un angle d'environ 90°, de sorte que la direction de propagation du faisceau laser sortant de la tête présente un petit angle d'incidence relativement au support (6). Ceci permet un soudage précis et efficace d'éléments cylindriques, notamment d'un serpentin (4) à la surface du support. Application à la fabrication de panneaux solaires.

## Description

La présente invention concerne une tête de soudage par un faisceau laser comprenant des moyens de focalisation de celui-ci qui définissent un axe optique selon une direction longitudinale de la tête. La zone de focalisation du faisceau laser est située à l'extérieur de la tête, cette zone de focalisation étant généralement prévue à proximité de l'endroit où le soudage au laser est effectué. On obtient ainsi une concentration de l'énergie dans la région de soudage et donc une précision dans cette opération de soudage.

La présente invention concerne également une installation de soudage au laser équipée d'une tête de soudage selon l'invention. En particulier, l'installation de soudage est agencée pour permettre le soudage d'éléments cylindriques sur une structure plane ou plaque, par exemple pour la réalisation de panneaux solaires avec circulation de fluide caloporteur dans un serpentin, lequel est soudé sur un support absorbant l'énergie thermique du rayonnement solaire.

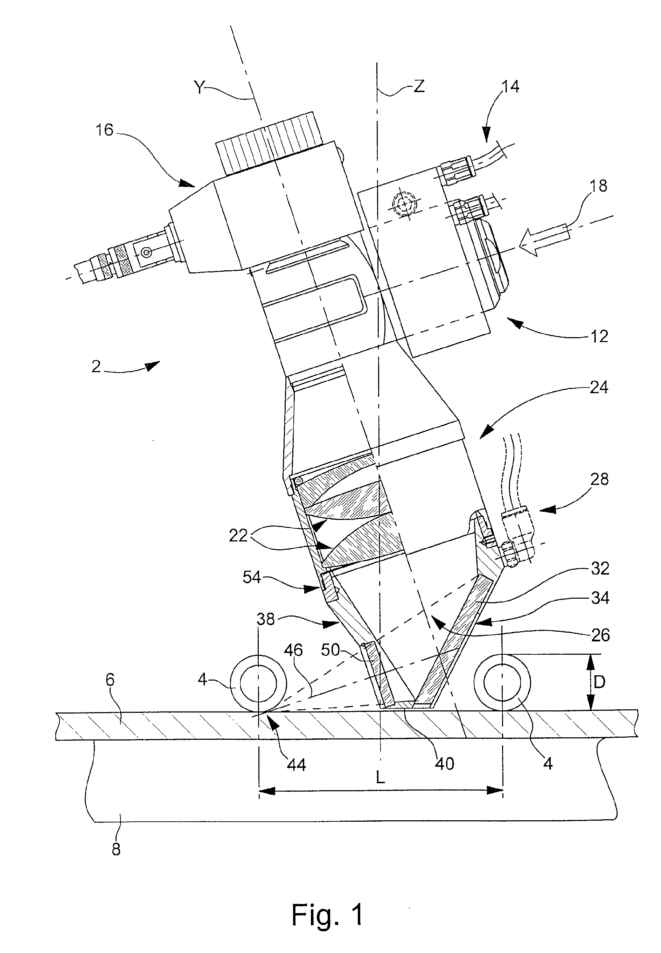

Dans le domaine d'application susmentionné, on utilise des têtes de soudage au laser de conception classique, c'est à dire où le faisceau laser focalisé sort de la tête selon l'axe optique défini par les moyens de focalisation, lesquels présentent des dimensions relativement importantes, comme cela ressort de la figure 1 qui sera décrite par la suite.

Etant donné la présence du support plan et du serpentin posés dessus, il est nécessaire d'apporter le faisceau laser pour le soudage du côté du serpentin. Le serpentin est généralement formé par un tuyau formé de plusieurs éléments cylindriques parallèles reliés par des coudes également de section circulaire. Ainsi, on comprend que l'utilisation d'une tête de soudage classique pose un problème majeur étant donné la présence de plusieurs éléments cylindriques sensiblement parallèles et à cause du diamètre de la tête de forme longitudinale, ce diamètre étant relativement important à cause des lentilles de focalisation du faisceau laser. Par conséquent, l'axe optique du faisceau laser sortant de la tête de soudage présente un décalage angulaire important relativement au plan du support. Il est donc difficile d'atteindre le dessous des éléments cylindriques avec le faisceau laser pour permettre un soudage précis et efficace du serpentin sur le support absorbant.

Avec les têtes de soudage actuelles, on doit se limiter à des tuyaux ayant un diamètre de 12 mm au maximum et séparés d'une distance minimum de 15 cm. Ceci constitue une limitation importante, sans toutefois permettre un soudage optimal des éléments cylindriques sur la surface plane du support absorbant.

Le but de la présente invention est de fournir une installation de soudage au laser palliant les inconvénients susmentionnés et permettant d'effectuer un soudage le plus localisé possible dans la région de contact entre un support plan et des éléments cylindriques, c'est à dire le plus proche possible de la ligne inférieure définie par ces éléments cylindriques. Un autre but est de permettre le soudage de tuyaux de diamètre supérieur au diamètre maximal actuel, en particulier un serpentin dont les éléments parallèles présentent un écartement moindre à l'écartement minimum actuel.

A cet effet, la tête de soudage selon l'invention comprend en outre des moyens pour réfléchir ou difracter le faisceau laser selon une direction décalée angulairement relativement à l'axe optique défini par les moyens de focalisation, ces moyens étant agencés après les moyens de focalisation relativement au sens de propagation du faisceau laser; c'est à dire du côté de la sortie de la tête de soudage.

Selon une caractéristique particulière, les moyens de réflexion ou de diffraction définissent une structure plane orientée obliquement relativement audit axe optique et sont agencés dans une paroi externe de la tête qui longe sensiblement ces moyens de réflexion ou de diffraction.

Selon une autre caractéristique particulière, la tête présente une partie terminale définissant un plan géométrique dans lequel est environ située la zone de focalisation du faisceau laser, cette partie terminale étant agencée directement au niveau de la partie terminale inférieure des moyens de réflexion ou de diffraction.

Il résulte de la tête de soudage selon l'invention qu'il est possible d'avoir la tête d'usinage orientée environ perpendiculairement au plan du support sur lequel est prévu le soudage d'éléments cylindriques tout en ayant la région de focalisation du faisceau laser proche du point du contact entre les parties à souder. De plus, il est ainsi possible de souder sur un support absorbant un serpentin dont le tuyau a un diamètre supérieur à 20 mm et dont la distance entre deux éléments parallèles adjacents est proche de, respectivement inférieure à 10 cm.

D'autres caractéristiques et avantages à la présente invention ressortiront également de la description suivant, effectuée à l'aide d'une figure unique ci-jointe représentant partiellement une installation de soudage laser selon l'invention, en particulier la tête de soudage selon l'invention représentée partiellement en coupe.

A la figure 1 est représenté un mode de réalisation préféré d'une installation laser selon l'invention, en particulier sa tête de soudage 2. Cette installation est particulièrement adaptée au soudage d'un serpentin 4 sur un support absorbant 6. Le serpentin 4 est formé par un tuyau de diamètre D présentant des parties parallèles séparées d'une distance L. Le support 6 est agencé sur des moyens 8 de maintien de celui-ci, agencés pour permettre un déplacement relativement à la tête d'usinage 2, notamment selon un axe X perpendiculaire au plan de la figure 1. Ceci permet d'effectuer un soudage le long de la ligne de contact entre le serpentin et le support absorbant. De plus, il est prévu que la tête 2 puisse subir une rotation autour de l'axe Z relativement au support 6, notamment pour effectuer le soudage des coudes du serpentin. L'installation de soudage est donc agencée pour permettre un soudage rapide de l'ensemble des parties du serpentin sur le support absorbant.

La tête de soudage 2 comprend des moyens d'introduction 12 d'un faisceau laser provenant d'une source laser non représentée. Ces moyens sont associés à des moyens 14 d'entrée et de sortie d'un fluide de refroidissement de la tête de soudage. Dans la partie supérieure de la tête est prévu une caméra 16 permettant un positionnement précis de la tête relativement au serpentin 4.

Le faisceau laser 18 entrant dans la tête est réfléchi pour se propager ensuite selon l'axe géométrique Y définissant l'axe longitudinal général de la tête 2 et confondu avec l'axe optique défini par les moyens de focalisation 22. Ces moyens de focalisation 22 sont agencés dans une partie intermédiaire 24 dont la section transversale présente des dimensions relativement importantes. En aval des moyens de focalisation 22, la tête présente une cavité 26 à l'intérieure de laquelle est maintenue une légère surpression à l'aide d'un gaz fourni par les moyens d'introduction 28. Ceci permet d'empêcher que des poussières ou autres impuretés ne pénètrent dans l'espace 26. Le faisceau laser focalisé pénètre l'espace 26 en direction d'un miroir 32 définissant un plan général oblique relativement à l'axe optique Y. On notera que dans un autre mode de réalisation, des moyens de diffraction sont prévus pour varier la direction de propagation du faisceau laser focalisé.

Le miroir 32 est agencé dans une paroi externe 34 qui longe le miroir 32 de manière à diminuer au maximum l'encombrement de la tête dans sa partie inférieure 38. Cet agencement particulier permet ainsi de diminuer la distance L séparant deux parties adjacentes du serpentin 4. La partie inférieure 38 de la tête présente une partie terminale 40 agencée directement au niveau de l'extrémité inférieure du miroir 32. Cette partie terminale définit un plan géométrique dans lequel est environ situé la zone de focalisation 44 du faisceau laser sortant de la tête.

Cet agencement particulier permet de diminuer l'angle entre la direction 46 du faisceau laser sortant et la surface du support 6. Ainsi cet agencement répond aux buts de la présente invention par le fait que l'angle d'incidence du faisceau laser sur le support 6 est relativement grand. Ceci permet au faisceau laser d'atteindre la région inférieure d'éléments cylindriques posés sur une surface plane, pour effectuer un soudage localisé et précis.

Dans le présent mode de réalisation, le plan du miroir 32 définit un angle d'incidence d'environ 45° pour le faisceau laser se propageant dans la direction de l'axe optique Y, ce qui conduit à une déviation angulaire du faisceau focalisé d'environ 90°. Cependant on peut diminuer cet angle d'incidence pour diminuer encore plus l'angle entre l'axe optique 46 du faisceau laser sortant et la surface du support 6. Pour ce faire, la distance focale des moyens de focalisation 22 est avantageusement augmentée; ce que le dispositif selon l'invention permet aisément de réaliser indépendamment de la distance L et du diamètre D.

On notera encore que la partie 38 comprend une lame transparente 50 à travers laquelle le faisceau laser sort de la tête 2.

Selon une variante préférée la partie inférieure 38 est montée fixement dans la tête 2 mais il est prévu des moyens 54 permettant de varier sa position angulaire, c'est à dire de permettre une rotation de cette partie autour de l'axe Y avant fixation de cette dernière. L'homme du métier saura concevoir au mieux les moyens de fixation de cette partie 38 dans une pluralité de positions angulaires discrètes ou dans une position quelconque.

## Revendications

1. Tête de soudage (2) par un faisceau laser (18) comprenant des moyens d'introduction (12) de ce faisceau laser et des moyens de focalisation (22) de celui-ci qui définissent un axe optique (Y) selon une direction longitudinale de la tête et agencés de manière que la zone de focalisation (44) dudit faisceau laser soit située à l'extérieure de cette tête, **caractérisée en ce qu'**elle comprend en outre des moyens pour réfléchir ou diffracter (32) ledit faisceau laser selon une direction décalée angulairement relativement audit axe optique, et **en ce que** ces moyens de réflexion ou de diffraction sont agencés après lesdits moyens de focalisation relativement au sens de propagation dudit faisceau laser.

2. Tête selon la revendication 1, **caractérisée en ce qu'**elle présente une forme allongée définissant un axe principal sensiblement confondu avec ledit axe optique (Y), lesdits moyens de réflexion ou de diffraction définissant une structure plane orientée obliquement relativement audit axe optique et agencée dans une paroi externe (34) de la tête qui longe sensiblement ces moyens de réflexion ou de diffraction.

3. Tête selon la revendication 1 ou 2, **caractérisée en ce qu'**elle présente une partie terminale (40) définissant un plan géométrique dans lequel est environ située ladite zone de focalisation, cette partie terminale étant agencée directement au niveau de l'extrémité inférieure desdits moyens de réflexion ou de diffraction (32).

4. Tête selon l'une des revendications précédentes, **caractérisée en ce que** ledit faisceau laser est réfléchi ou diffracté sensiblement selon un ange de 90° relativement audit axe optique.

5. Tête selon l'une des revendications précédentes, **caractérisée en ce que** lesdits moyens de réflexion ou de diffraction sont agencés dans une partie inférieure (38) de la tête équipée de moyens permettant sa rotation autour dudit axe optique relativement auxdits moyens d'introduction du faisceau laser (12).

6. Installation de soudage par un faisceau laser, **caractérisée en ce que** cette installation comprend une tête selon une des revendications 1 à 5 et une source laser fournissant ledit faisceau laser.

7. Installation de soudage par un faisceau laser, **caractérisée en ce que** cette installation comprend une tête (2) selon la revendication 3 et des moyens (8) pour recevoir une structure plane ou plaque (6) à une surface de laquelle il est prévu de souder des éléments cylindriques (4), en particulier un tuyau formant un serpentin, cette installation comprenant des moyens pour déplacer ladite tête relativement à ladite structure plane ou plaque dans un plan sensiblement parallèle audit plan géométrique défini par la partie terminale (40) de ladite tête.

8. Utilisation de l'installation de soudage selon la revendication 6 ou 7 pour la fabrication de panneaux solaires à circulation d'un fluide caloporteur.
